(19) Europäisches Patentamt
European Patent Office
Office européen des brevets

(11) **EP 4 382 952 A1**

(12) **EUROPEAN PATENT APPLICATION**

(43) Date of publication:
**12.06.2024 Bulletin 2024/24**

(51) International Patent Classification (IPC):
**G01S 7/04** (2006.01)    **G01S 7/41** (2006.01)
**G01S 13/931** (2020.01)    **G01S 13/86** (2006.01)

(21) Application number: **22212340.8**

(52) Cooperative Patent Classification (CPC):
**G01S 7/04; G01S 7/411; G01S 7/417;**
**G01S 13/865; G01S 13/867; G01S 13/931;**
G01S 2013/9317; G01S 2013/9322

(22) Date of filing: **08.12.2022**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Aptiv Technologies AG**
**8200 Schaffhausen (CH)**

(72) Inventors:
• **Beauvillain, Alexis**
**91300 MASSY (FR)**

• **Luszek, Moritz**
**32760 Detmold (DE)**
• **Donner, Olaf**
**31177 Harsum (DE)**
• **Mangal, Nandita**
**San Jose, 95117 (US)**

(74) Representative: **Manitz Finsterwald**
**Patent- und Rechtsanwaltspartnerschaft mbB**
**Martin-Greif-Strasse 1**
**80336 München (DE)**

(54) **METHODS AND SYSTEMS FOR DISPLAYING INFORMATION TO AN OCCUPANT OF A VEHICLE**

(57)    A computer implemented method for displaying information to an occupant of a vehicle comprises the following steps carried out by computer hardware components: determining data associated with radar responses captured by at least one radar sensor mounted on the vehicle; determining a visualization of the data; and displaying the visualization to the occupant of the vehicle.

Fig. 3

Processed by Luminess, 75001 PARIS (FR)

## Description

FIELD

The present disclosure relates to methods and systems for displaying information to an occupant of a vehicle.

BACKGROUND

The occupants of a vehicle, in particular the driver, rely on what they can observe in the environment of the vehicle. However, in some situations, for example during low light or darkness, the human eye is inferior to technical means like cameras for observing the environment.

Accordingly, there is a need to provide enhanced methods and systems for displaying information to the occupant of the vehicle.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for displaying information to an occupant of a vehicle, the method comprising the following steps performed (in other words: carried out) by computer hardware components: determining data associated with radar responses captured by at least one radar sensor mounted on the vehicle; determining a visualization of the data; and displaying the visualization to the occupant of the vehicle.

Determining a visualization may be understood as preparing and determining the layout, design, color, arrangement and any other visual property of the data to be displayed. Displaying the visualization may be understood as the actual presentation of the determined visualization, for example using a display device.

With the methods as described herein, a night vision system using data based on radar signals may be provided.

It will be understood that although various embodiments are described using data associated with radar responses, also sensors to sensors other than radar sensors may be used. For example, the data may be associated with Lidar data or infrared data.

The data may be an output of a method to process radar data, for example to process radar responses. The method may be a trained machine learning method, for example an artificial neural network. For example, the method may be RadorNet or a successor of RadorNet, as for example described in US 2022/0026568 A1, which is incorporated herein by reference for all purposes.

According to an embodiment, the visualization comprises a surround view of a surrounding of the vehicle. Using the radar, a surround view of the vehicle, for example ego car, may be provided regardless of illumination and adverse weather conditions.

According to an embodiment, the at least one radar sensor may include a system comprising radar sensors provided at different locations. According to an embodiment, the at least one radar sensor comprises four radar sensors. For example, four corner radars may enable a 360° view around the ego vehicle.

According to an embodiment, the at least one radar sensor is used for L1 functions or L2 functions or L3 functions or L4 functions or L5 functions . For example, the radars used for common L1 / L2 / L3 / L4 / L5 functions may, besides their use for L1 or L2 or L3 or L4 or L5 functions, may also support night vision. L1 (Level 1) functions may refer to driving assistance functions where the hands of the driver may have to remain on the steering wheel and these functions may also refer to shared control. L2 (Level 2) functions may refer to driving assistance functions where the driver's hands may be off the steering wheel. L3 (Level 3) functions may refer to driving assistance functions where the driver's eyes may be off the actual traffic situations. L4 (Level 4) functions may refer to driving assistance functions where the driver's mind may be off the actual traffic situation. L5 (Level 5) functions may refer to driving assistance functions where the steering wheel is entirely optional, i.e. driving without any user interaction at any time is possible.

According to an embodiment, the computer implemented method further comprises determining a trigger based on a driving situation, wherein the visualization is determined based on the trigger. For example, different aspects of the visualization may be triggered based on trigger. An aspect may for example be whether the visualization concerns a dangerous situation for a pedestrian, or for another vehicle or the like. For example, triggers like speed of the vehicle or gear selection may be used to determine the driving situation and thus make the view change dynamically from front facing to 360° overview for an improved driver experience.

According to an embodiment, the driving situation comprises at least one of a fog situation, a rain situation, a snow situation, a traffic situation, a traffic jam situation, a darkness situation, or a situation related to other road users. For example, a situation related to other road users may include a fast motorbike approaching between lanes. The trigger may be triggered when the respective situation occurs. For example, the trigger may trigger when ambient light is below a predetermined threshold. According to various embodiments, a sequence of triggering steps may be provided (for example during sunset).

According to an embodiment, the trigger is determined based on at least one of a camera (for example for determination of fog, rain, or snow), a rain sensor, vehicle to vehicle communication, a weather forecast, a clock, a light sensor, a navigation system, or an infrastructure to vehicle communication. For example when using infrastructure to vehicle communication, weather stations along road may be provided to the vehicle from infrastructure provided along the road; illustratively, for example, a bridge may tell the vehicle that the bridge is icy.

According to an embodiment, the visualization comprises information of a navigation system. This may allow that the visualization provides a view combined with navigation instructions (for example, visualization data may be highlighted along the route or along a "driving horizon").

According to an embodiment, the data comprises object information based on the radar responses. Object detection may show object instances dangerous to the driver and others as needed. Objects size, orientation, speed and heading may be used to improve the visualization.

According to an embodiment, the visualization may be determined based on a distance of objects. For example, an object that is further away may be visualized different from an object which is close. Furthermore, different visualization may be provided based on how dangerous a situation is.

According to an embodiment, the data comprises segmentation data based on the radar responses. According to an embodiment, the data comprises classification data based on the radar responses. The visualization may then be determined based on the segmentation data and/or based on the classification data. For example, segmentation may be used to highlight dangerous classes, and also a class free overview of obstacles in the environment may be provided.

"Class free" may refer to not needing to be tied to a specific task. Class "occupied" may cover all classes an object detector is trained on and many more. Semantic segmentation thus may have extra information that can tell if the path is occupied not specifically knowing what is the blocking object. Object detection may have classes defined beforehand on which it is then trained. However, it may not be desired to have too many classes in the object detector, since decision boundaries might not be sufficiently well defined. When just considering cell based classification, a free/occupied decision may be provided that can cover a much broader range of objects.

For example, parked cars and/or sidewalks and/or free space and/or road boundaries may be classified into respective classes of parked cars and/or sidewalks and/or free space and/or road boundaries, and the objects may be shown as segmented colored image.

According to an embodiment, the method comprises determining a height of an object based on the classification. The classification result (for example of a ML method) may be used to generate a pseudo height for better visualization. A pseudo height may be an estimate of the average height of objects; for example, a car may be roughly 1.6m high, and a pedestrian may be roughly 1.7m tall on average. Thus, the visualization may be based on height.

The class may also be used to provide estimates for other properties than height, for example for shape. For example, a car may have a longish shape in a horizontal direction, whereas a pedestrian may have a longish shape in a vertical direction. In another embodiment, 2D shape of objects may be measured and estimated using the radar sensor to provide.

According to various embodiments, representations based on the class may be provided. For example, if a car is detected, a model may be provided for the car. If additional the shape is measured or estimated, the model may be adjusted to the shape.

According to an embodiment, the visualization comprises a driver alert. For example, driver alert generation and object instances/segmentation results may be processed to alert the driver in certain situations.

For example, the driver alerts may be provided in a progressive manner. For example, alerts in various levels may be provided, wherein a subsequent level of alert is provided if the alert situation persists or if a user does not react to an alert. For example, in a first level of alert, an alert may be provided on a display, followed by a second level of alert, provided in a different color, followed by a third level of alert, for example acoustic, for example using an audio system, followed by a fourth level of alert using seat shakers.

According to an embodiment, the visualization is displayed in an augmented reality display. The augmented reality display may overlay the visualization on a HUD (head up display) with the surroundings.

According to an embodiment, the visualization is determined based on combining the data with at other sensor data. The other sensor data may include at least one map. For example, radar data may be combined with other sensor data or maps, for example from an online map service, to create and display images to the driver.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system as described herein and the at least one radar sensor.

In another aspect, the present disclosure is directed at a non-transitory computer readable medium comprising instructions which, when executed by a computer, cause the computer to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1A   an illustration of a visualization of an example image with a bike warning according to various embodiments;

Fig. 1B   an illustration of a visualization of an example image with a pedestrian warning according to various embodiments;

Fig. 1C   an illustration of a visualization of an example image with a pedestrian warning according to various embodiments;

Fig. 2   an illustration of a display in 3D with pseudo heights of various objects added according to various embodiments;

Fig. 3   an illustration according to various embodiments of a camera view of the scene from Fig. 2;

Fig. 4   flow diagram illustrating a method for displaying information to an occupant of a vehicle according to various embodiments;

Fig. 5   a flow diagram illustrating a method for displaying information to an occupant of a vehicle according to various embodiments; and

Fig. 6   a computer system with a plurality of computer hardware components configured to carry out steps of a computer implemented method for displaying information to an occupant of a vehicle according to various embodiments.

DETAILED DESCRIPTION

Commonly used night vision displays may employ infrared (IR) lights and an IR camera to provide the driver with enhanced vision outside of the high beam illumination region. They may also highlight alive objects humans/animals and other heat emitting structures. Coincidentally these alive objects may the ones that can be dangerous to the driver and thus are of high interest for safe driving.

A commonly used night vision system may include powerful IR beams in driving direction and an IR camera looking at those illuminated areas. The resulting IR image may be processed and displayed in the cockpit to give the driver a better overview of the surroundings and heat emitting structures.

However, commonly used night vision systems may suffer from one or more of the following. IR systems may only be front facing and may thus have a limited operational domain. IR systems may be costly, for example up to 1000$ per vehicle. Energy consumption may be high when powerful IR lamps are used. Additional components may be needed, which may increase installation costs. Commonly used systems may not directly detect movement. Adverse weather conditions may limit system performance, and commonly used systems may have a limited range and may be dependent on temperature differences.

According to various embodiments, methods and systems may be provided which may use a number of radars placed around the vehicle and which may provide an end-to-end architecture from radar responses (for example low level radar data) to a final segmentation or detection output. For example, low level radar data based night-vision using segmentation and object detection may be provided.

The methods and systems according to various embodiments may integrates occupancy information, segmentation and object detection from a machine learning (ML) method, for example an ML network, to generate a 3D (three-dimensional) image representation to show the driver outlines, classification and speed of the surroundings and highlight special objects instances.

Special objects instances may be potentially dangerous to the driver and may possess a classification, size, orientation and speed information for subsequent methods to be described to generate warnings to the driver. Special objects may for example be pedestrians, bicyclists, animals, or vehicles.

For segmentation and occupancy determination, a speed may be assigned to each cell and classified into one of a plurality of classes may be provided. The plurality of classes may, for example, include:

occupied_stationary (for example for cells which include a stationary object), occupied_moving (for example for cells which include a moving object), free, pedestrians, bicyclists, animals, vehicles. For example, the occupied_stationary and occupied_moving classes may be a superset of the other classes. For example, all pedestrians, bicyclists, animals, or vehicles may appear in the occupied_moving class. In case there are other objects moving but not covered by pedestrians, bicyclists, animals, or vehicles, then they may be included in the occupied_moving class.

Machine learning may add a classification for the detected objects and may also improve the detection/segmentation performance in cluttered environments. These information may then be used to improve the visualization, like for example adding a priori height information based on the 2D (two dimensional) classification results even if the sensor cannot detect the height to achieve a 3D representation of a segmentation map.

According to various embodiments, the radar sensor data may be combined with camera images or fused with the information from other sensors to generate an augmented map of the environment with additional information using an appropriate method. As an example, the radar image may be combined with a camera image helping to augment the camera view with distance, speed and classification information (for example boxes or segmentation).

According to various embodiments, a visualization of the image representation may be provided.

Occupancy/segmentation information may available as birds eye view (BEV) grid maps and the object detection as a list of bounding boxes. According to various embodiments, these 3D objects and segmentation/occupancy grids may be merged in a 3D view to give the driver a better understanding about the surroundings and potentially hazardous objects for the ego vehicle. This may make navigation easier and point out possible dangers especially in low visibility settings and adverse weather conditions. Especially in low visibility settings and adverse weather conditions e.g. a snowy road, besides a convenience function, benefits in safety may be provided. Machine learning (ML) may enable the distinction of classes in segmentation and detection, and this knowledge may be used to display 3D models of the classes detected/segmented. For example, if a pedestrian is detected, a 3D model may be shown in the view at the position with the heading as obtained from the ML model.

According to various embodiments, To avoid distraction, colors and view may be chosen to have a clear meaning and be easily interpretable. The display may be in the cockpit or using augmented reality be embedded in a head up display.

In the night vision display according to various embodiments, this may be achieved by selecting a number of views for the driver. The driver may have a limited field of view focusing on the areas relevant for a safe driving. According to various embodiments, the 2D BEV may be turned into a 3D view and the viewing angle in the 3D view may be aligned with the drivers view on the surroundings to enable an easy transition of looking outside the front window and the view according to various embodiments. Objects that are static, not in the drivers path or deemed to be not dangerous may be drawn in a neutral color scheme. In contrast thereto, VRU (vulnerable road users) objects in the driving path or in other dangerous objects may be highlighted. The ML may enable the distinction of classes in segmentation and detection which may make these separations in warning levels possible.

According to various embodiments, warnings to the driver may be generated utilizing the class, speed, heading of objects or segmentation cells. Based on target and ego speed and heading, a time to collision may be calculated. Utilizing the classification information, this may be augmented, for example for pedestrians on a sidewalk which walk at a collision path but are very likely to stop at a traffic light. Thus, multiple classes of warnings may be generated., e.g. object on collision path but likely not to collide due to knowledge about the class may be displayed differently than a certain collision. ML may enable the distinction of classes in segmentation and detection which may make these separations in warning levels possible. Further examples of warnings may include: VRU (vulnerable road user) on the road; VRU on a trajectory that can interfere with the ego trajectory; VRU anywhere in the front/back/sides/general area of interest; unknown object on driving trajectory; unknown object trajectory crosses ego trajectory; ego trajectory points towards occupied areas; ego vehicle is dangerously close to other objects.

According to various embodiments, the respective pixels/objects may be highlighted, as will be described in the following.

According to various embodiments, warnings may be displayed either placed in a fixed area of the night vision view where they do not obstruct the view (this way the driver may alerted whenever the scene contains objects potentially dangerous) or each object may get its own notification based on the warning level/classification computed. The 3D objects displayed at the positions of detected/segmented objects may be modified based on the warning level, e.g. 3D models of pedestrians increase their brightness or color scheme to be better susceptible to the driver The warning sign may then appear on top of the respective object. This way, the driver may not only be alerted, but also shown where the danger is located. Warnings may be flashing objects/pixels, color variations, background color variations, warning signs located in the image or on top of objects/pixels, arrows showing the point of intersection of ego and target trajectories.

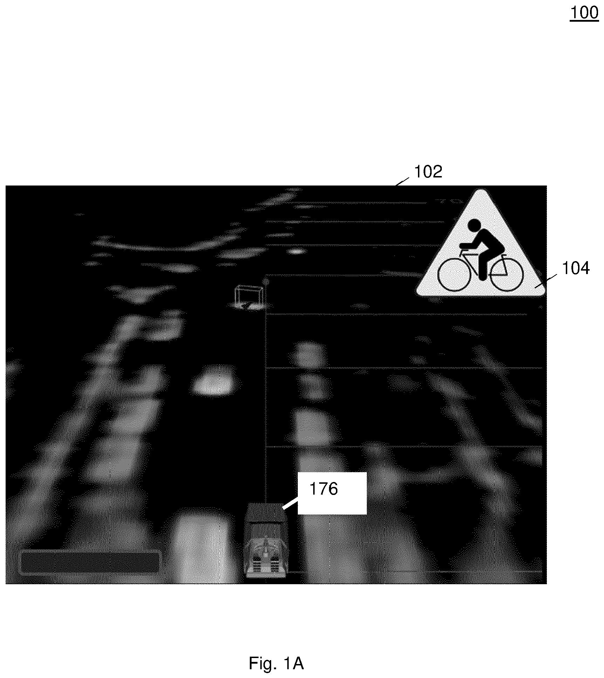

Fig. 1A shows an illustration 100 of a visualization 102 of an example image with a bike warning 104 according to various embodiments. The ego vehicle 106 is also illustrated in the visualization 102.

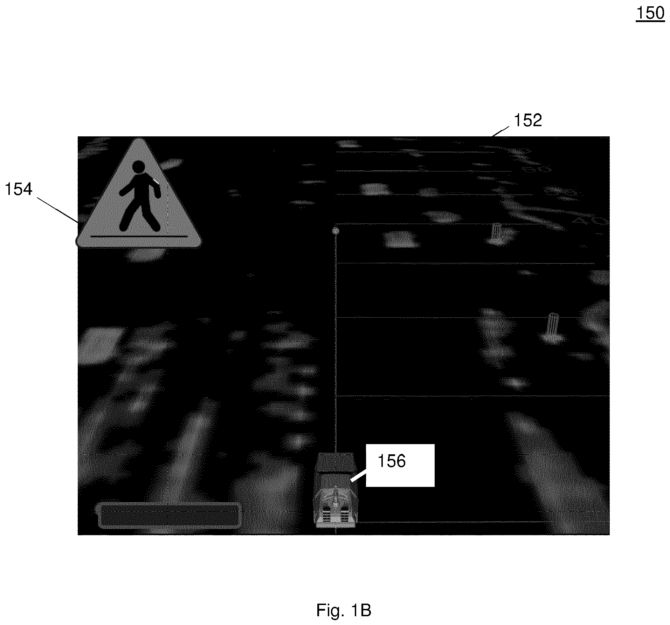

Fig. 1B shows an illustration 150 of a visualization 152 of an example image with a pedestrian warning 154 according to various embodiments. The ego vehicle 156 is also illustrated in the visualization 152.

As can be seen, compared to the bike warning 104 of Fig. 1A, the pedestrian warning 154 is provided in a different place. For example, the warning (for example bike warning 104 or pedestrian warning 154) may be provided at a place or location depending on the type of object for the warning (for example bike or pedestrian).

According to an embodiment, the location may depend on where the object is. For example, a warning sign may be provided on top of the bounding box of the object.

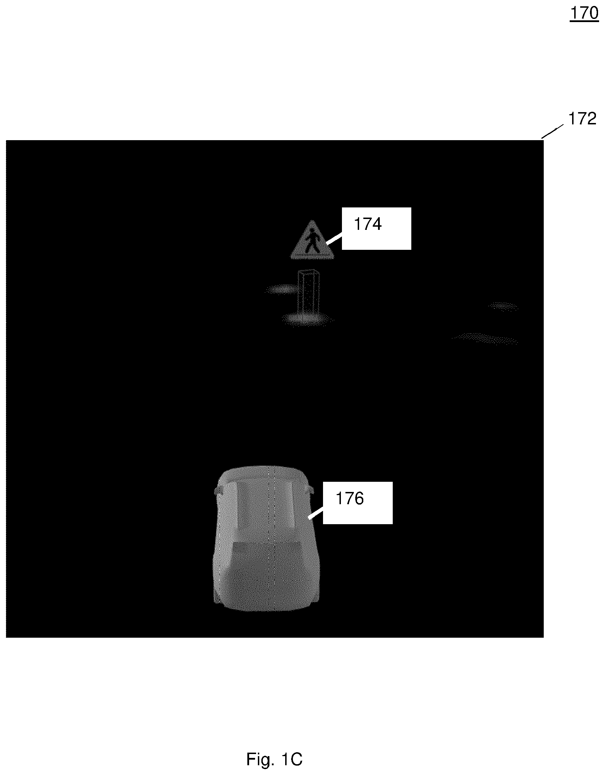

Fig. 1C shows an illustration 170 of a visualization 172 of an example image with a pedestrian warning 174 according to various embodiments, wherein the pedestrian warning 174 is provided on top of the bounding box of the pedestrian. The ego vehicle 176 is also illustrated in the visualization 172.

It will be understood that more than one bounding box may be displayed, and accordingly, more than one warning sign may be displayed (for example, one warning sign for each bounding box which represents a potentially dangerous or endangered object).

According to an embodiment, a warning signal may be displayed both on top of the bounding box (as shown in Fig. 1C) and at a pre-determined location of the display depending on the type of object for the warning (as shown in Fig. 1A and Fig. 1B).

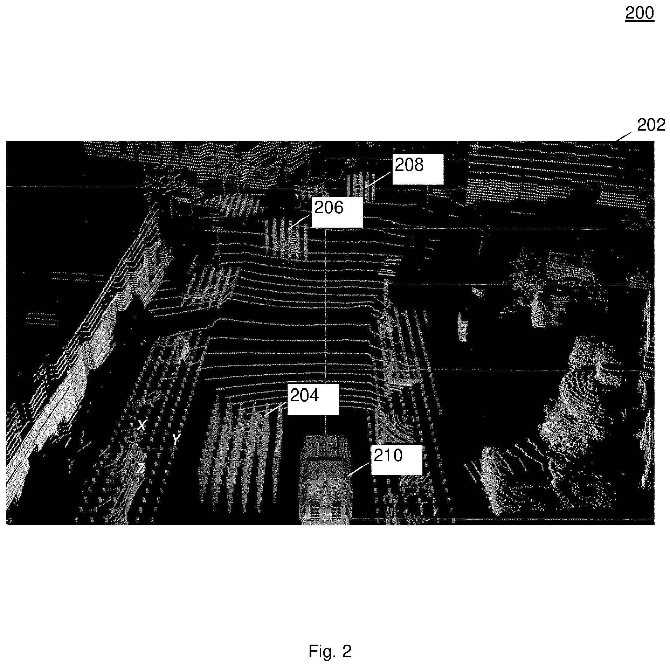

According to various embodiments, a 3D representation of the scene may be generated. Using a (low cost) radar sensor even without a good height resolution and discrimination, the classification results of segmentation or detection may be used to find information about the height of objects based on their class and a priori knowledge. An example is illustrated in Fig. 2. The information content may be increased and the interpretability for the driver may be improved using the ML.

Fig. 2 shows an illustration 200 of a display 202 in 3D with pseudo heights of various objects added according to various embodiments.

Segmentation information is displayed for a pedestrian 206, for a moving vehicle 204, and for a moving bike 208. The ego vehicle 210 is also illustrated. It will be understood that the boxes 204, 206, 208 may or may not be displayed to the driver.

Besides the information described above, Fig. 2 includes lidar lines, which are not described in more detail and which may or may not be provided in the display to the driver.

According to various embodiments, multiple classes may be added to the semantic segmentation to have the information available per pixel, a pseudo 3D map as shown in Fig. 2 may be provided.

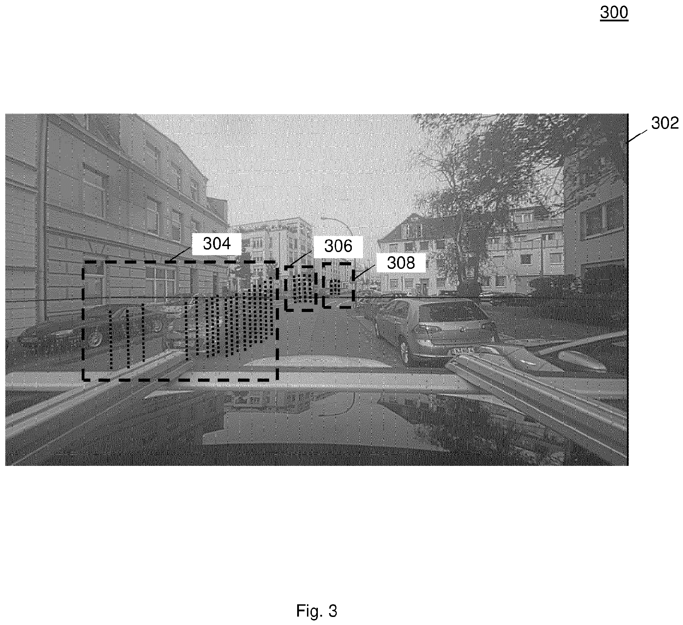

Fig. 3 shows an illustration 300 according to various embodiments of a camera view 302 of the scene from Fig. 2, including a pseudo 3D point cloud to highlight dangers. It will be understood that instead of a 3D point cloud, bounding boxes from detection may be used. The "pseudo" in "pseudo 3D point cloud may refer to the point cloud coming from a 2D BEV semantic segmentation. A height and thus a third dimension may be assigned based on the classification result and a priori knowledge.

Similar to Fig. 2, but in a different view, segmentation information is displayed in Fig. 3 for a pedestrian (illustrated by box 306), for a moving vehicle (illustrated by box 304), and for a moving bike (illustrated by box 308). It will be understood that the boxes 304, 306, 308 may or may not be displayed to the driver.

According to various embodiments, the 3D scene representation may be overlaid onto a camera image and displayed in the car or used in a head up display (HUD) to achieve an augmented reality like shown in Fig. 3. The camera may also be used to run segmentation/detection on the camera image and use a network to fuse the results of radar and camera networks to generate a more convincing representation of the scene. Fusing the depth information and the segmentation/detection results of radar and the image with its segmentation/detection may result in that a true 3D map may be generated.

According to various embodiments, a 3D scene reconstruction may be used, for example to obtain a more visually pleasing or visually simplified representation of the current surroundings of the ego vehicle. A cost-efficient corner radar may give a 2D point cloud and object list with a pseudo height determined based on classification results. A front radar may give a 3D point cloud and object list, using machine learning the height resolution may be increased and, like in the 2D case, the classification of all grid points may be enabled. Using either the box classes and the height information of points within these boxes or the 3D point cloud/2d point cloud with pseudo height, a neural network (for example GAN (Generative Adversarial Networks)/NerF (Neural Radiance Field)) may generate a camera image like view on the scene based on the radar segmentation/detection. Incorporating the true 3D radar point cloud may improve the visual impression considerably and may enable new features like giving a height warning in case of too low bridges or signs or tree branches.

According to various embodiments, view changes may be provided based on triggers. For example, based on ego speed (in other words: based on the speed of the vehicle), the view and area of interest for the driver may change. For example, when driving forwards with a speed higher than a pre-determined threshold (for example 30 km/h) the frontward view (as illustrated in Fig. 1) may be most informative and may thus be chosen as the illustration. When going slower, the objects in high distance may lose a bit of interest as the time to collision increases but the objects in the surroundings of the vehicle may get more important (for example, a motorbike trying to overtake from behind, or a tailgating bicyclist). When coming to a stop, a birds eye view centered in the middle of the ego vehicle of a close vicinity (for example 40m) of the vehicle may be most interesting and selected as a visualization. When putting in reverse gear, the view may be centered around the back of the vehicle.

According to various embodiments, based on speed, the visualization may we move gradually from the front facing high distance view to a birds eye view. A gradual transition may be provided as follows:

1) Move focal point towards from somewhere in front of vehicle to the middle of the ego vehicle. The steps may be discretized, for example every 30kph or to have triggers at 30kph 50khp 100 kph.
2) Move the focal point from vehicle center to the front on increasing speed, for example according to Focal point = min(high speed focal_point , speed * step size speed).
3) Lower camera on decreasing speed to go from a BEV view to an over the shoulder view, for example according to Camera height = min(high_speed_camera_height, low_speed_camera_height - speed * step_size_height).

In the above equation, Low_speed_camera_height may be greater than high_speed_camera_height. When being slow, the camera may be in birds eye view, and when being fast, the camera may be in "over the shoulder view" and thus much lower.

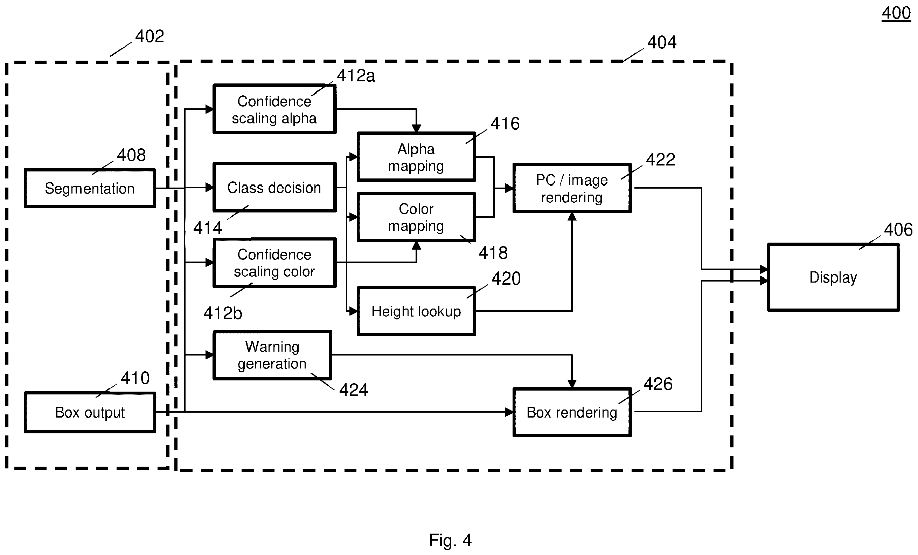

Fig. 4 shows a flow diagram 400 illustrating a method for displaying information to an occupant of a vehicle according to various embodiments. Data 402 may be processed, for example by blocks 412a to 426 (illustratively summarized by dashed box 404), to provide the determination of visualization. The visualization may then be displayed on a display 406.

For example, a segmentation 408 and a box output 410 may be provided from a method to process radar data. The segmentation 408 and the box output 410 may be the data associated with radar responses which are used for visualization according to various embodiments.

The segmentation 408 and/ or the box output 410 may be provided to further processing, for example to confidence scaling (which may be provided in a confidence scaling alpha module 412a which provides the scaling for the alpha mapping and a confidence scaling color module 412b which provides the scaling for the color mapping) and/or to class decision 414, and/or to warning generation 424 and/or to box rendering 426.

Class decision 414 may determine a class based on confidence, for example with a highest confidence wins strategy.

Depending on the class and/or depending on whether the output is to the color or alpha mapping, the confidence scaling 412a/b may scale the confidence differently from 0 to 1. For example, with three classes network output for n pixels in the grid $x \in \mathbb{R}^{n \times 3}$ , the confidence may equal to $\frac{\frac{1}{1+e^{-0.5*x}}}{\sum_{i\in[0,1,2]}\frac{1}{1+e^{-0.5*x[...,i]}}}$ which is a normalized sigmoid. In an example, softmax may be used. Scaling may be done based on multiple classes. For example, occupied scores may be scaled based on all occupied classes present in the pixel. For classes free (or class free), confidence may be set to 0 for the later mapping. For alpha channel, the confidence may be scaled separately.

The output of confidence scaling 412a/b may be provided to alpha mapping 416 and/ or color mapping 418.

The output of class decision 414 may be provided to alpha mapping 416 and/ or to color mapping 418 and/or to height lookup 420.

The alpha mapping 416 may take the confidence scaled from the alpha scaling module 412a, for example using the winning class to use as alpha value. The alpha scaling module 412a (which may also be referred to as the confidence scaling alpha module) and the confidence scaling color module 412b may be combined in a confidence scaling module.

The color mapping 418 may take the confidence scaled from the alpha scaling module, for example using the winning class to use as alpha value. Then the confidence may be taken to index a discretized/continuous color map to obtain an rgb (red, green, blue) value.

The height lookup 420 may look up an a priori height from a table based on the class decision. For example, a car may have an average height (which may be referred to as pseudo height) of 1.6m, a pedestrian of 1.7m, a bike of 2.0m, free space of 0m, and an occupied space of 0.5m.

The output of the alpha mapping 416 the color mapping 418, and the height lookup may be provided to PC (personal computer) or image rendering 422. The PC/image rendering 422 may provide a grid map with rgba (red green blue alpha) values assigned to it, which may be input either into a point cloud visualization (for example like illustratively shown in Fig. 2) or an image visualization (for example like illustratively shown in Fig. 3).

The warning generation 424 may generate warnings based on the box output 410 and the segmentation 408. The warning generation module 424 may generate warnings depending on for example when a collision with boxes in future is eminent, or boxes in dangerous areas with areas depending on the class, obstacles in driving path regardless of class based on segmentation.

The output of the warning generation 424 may be provided to box rendering 426.

The box rendering 426 may take the box output 410 and the warning level and may modify box representation warning sign display and then may output the result to a box visualization.

The output of the image rendering 422 and the box rendering 426 may be displayed on the display 406.

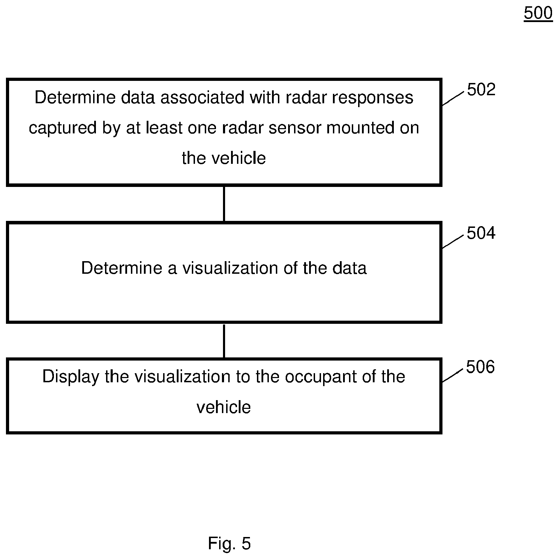

Fig. 5 shows a flow diagram 500 illustrating a method for displaying information to an occupant of a vehicle according to various embodiments. At 502, data associated with radar responses captured by at least one radar sensor mounted on the vehicle may be determined. At 504, a visualization of the data may be determined. At 506, the visualization may be displayed to the occupant of the vehicle.

According to various embodiments, the visualization may include or may be a surround view of a surrounding of the vehicle.

According to various embodiments, a trigger may be determined based on a driving situation, and the visualization may be determined based on the trigger.

According to various embodiments, the driving situation may include or may be at least one of a fog situation, a rain situation, a snow situation, a traffic situation, a traffic jam situation, a darkness situation, or a situation related to other road users.

According to various embodiments, the trigger may be determined based on at least one of a camera, a rain sensor, vehicle to vehicle communication, a weather forecast, a clock, a light sensor, a navigation system, or an infrastructure to vehicle communication.

According to various embodiments, the visualization may include information of a navigation system.

According to various embodiments, the data may include or may be object information based on the radar responses.

According to various embodiments, the data may include or may be segmentation data based on the radar responses.

According to various embodiments, the data may include or may be classification data based on the radar responses.

According to various embodiments, a height of an object may be determined based on the classification.

According to various embodiments, the visualization may include or may be a driver alert.

According to various embodiments, the visualization may be displayed in an augmented reality display.

According to various embodiments, the visualization may be determined based on combining the data with at other sensor data.

According to various embodiments, the representation of stationary objects may be improved by aggregating data from multiple scans over time using ego motion compensation of the scans.

According to various embodiments, the visualization (for example illustrated as a map) may show the height of objects and free space.

According to various embodiments, radar data and camera data may be used to generate a combined representation of the environment by overlaying both images. Furthermore, radar data may be used to perform a geometric correction of the camera image using the birds eye view image from the radar. The birds eye view image may be acquired by the camera. To achieve a birds eye view from the camera, it may be mapped to birds eye view with a geometric correction.

According to various embodiments, the data may be transformed (for example using a machine learning method) to enhance the image quality for the driver, e.g. improving resolution, filtering noise and improving visual quality.

According to various embodiments, radar data may be transformed into a natural or enhanced looking image, e.g. a cycle gan (Cycle Generative Adversarial Network) may be used to generate a more natural looking virtual image.

According to various embodiments, critical objects in path may be highlighted on the display and doppler measurements may be used to provide additional information.

Each of the steps 502, 504, 506 and the further steps described above may be performed by computer hardware components.

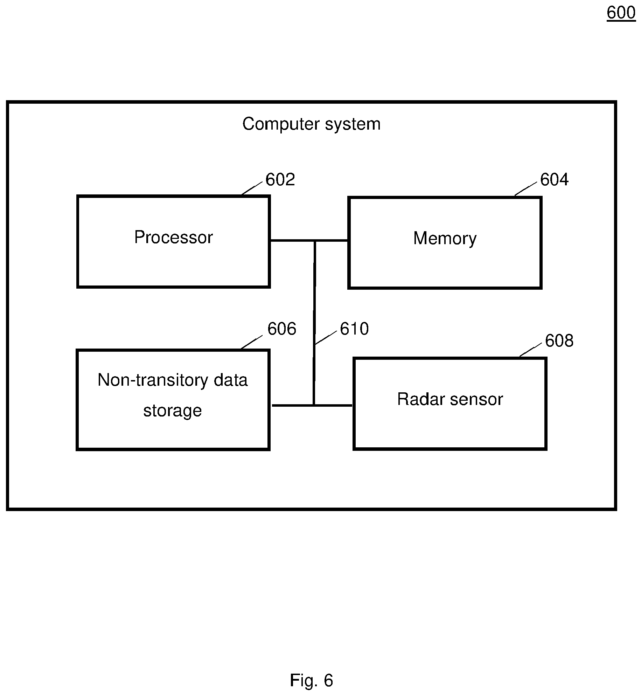

Fig. 6 shows a computer system 600 with a plurality of computer hardware components configured to carry out steps of a computer implemented method for displaying information to an occupant of a vehicle according to various embodiments. The computer system 600 may include a processor 602, a memory 604, and a non-transitory data storage 606. A radar sensor 608 may be may be provided as part of the computer system 600 (like illustrated in Fig. 6), or may be provided external to the computer system 600.

The processor 602 may carry out instructions provided in the memory 604. The non-transitory data storage 606 may store a computer program, including the instructions that may be transferred to the memory 604 and then executed by the processor 602. The radar sensor 608 may be used for capturing the radar responses. One or more further radar sensors (similar to the radar sensor 608) may be provided (not shown in Fig. 6).

The processor 602, the memory 604, and the non-transitory data storage 606 may be coupled with each other, e.g. via an electrical connection 610, such as e.g. a cable or a computer bus or via any other suitable electrical connection to exchange electrical signals. The radar sensor 608 may be coupled to the computer system 600, for example via an external interface, or may be provided as parts of the computer system (in other words: internal to the computer system, for example coupled via the electrical connection 610).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 600.

Reference numeral list

| | |
|---|---|
| 100 | an illustration of a visualization |
| 102 | visualization of an example image |
| 104 | bike warning |
| 106 | ego vehicle |
| 150 | an illustration of a visualization |
| 152 | visualization of an example image |
| 154 | pedestrian warning |
| 156 | ego vehicle |
| 170 | an illustration of a visualization |
| 172 | visualization of an example image |
| 174 | pedestrian warning |
| 176 | ego vehicle |
| | |
| 200 | illustration of a display |
| 202 | display |
| 204 | segmentation information highlighting moving vehicle |
| 206 | segmentation information highlighting pedestrian 208 segmentation information highlighting moving bike |
| 210 | ego vehicle |
| | |
| 300 | an illustration of a camera view |
| 302 | camera view of the scene from Fig. 2 |
| 304 | box highlighting moving vehicle |
| 306 | box highlighting pedestrian |
| 308 | box highlighting moving bike |
| | |
| 400 | flow diagram illustrating a method for displaying information to an occupant of a vehicle according to various embodiments |
| 402 | data associated with radar responses |
| 404 | determination of visualization |
| 406 | display |
| 408 | segmentation |
| 410 | box output |
| 412a | confidence scaling alpha |
| 412b | confidence scaling color |
| 414 | class decision |
| 416 | alpha mapping |
| 418 | color mapping |
| 420 | height lookup |
| 422 | image rendering |
| 424 | warning generation |
| 426 | box rendering |
| | |
| 500 | flow diagram illustrating a method for displaying information to an occupant of a vehicle according to various embodiments |
| 502 | step of determining data associated with radar responses captured by at least one radar sensor mounted on the vehicle |
| 504 | step of determining a visualization of the data |
| 506 | step of displaying the visualization to the occupant of the vehicle |
| 600 | computer system according to various embodiments |
| 602 | processor |
| 604 | memory |
| 606 | non-transitory data storage |
| 608 | radar sensor |
| 610 | connection |

**Claims**

1. Computer implemented method for displaying information to an occupant of a vehicle,
the method comprising the following steps carried out by computer hardware components:

   - determining (502) data associated with radar responses captured by at least one radar sensor mounted on the vehicle;
   - determining (504) a visualization of the data; and
   - displaying (506) the visualization to the occupant of the vehicle.

2. The computer implemented method of claim 1, wherein the visualization comprises a surround view of a surrounding of the vehicle.

3. The computer implemented method of at least one of claims 1 to 2, further comprising the following step carried out by the computer hardware components:

   determining a trigger based on a driving situation;
   wherein the visualization is determined based on the trigger.

4. The computer implemented method of claim 3, wherein the driving situation comprises at least one of a fog situation, a rain situation, a snow situation, a traffic situation, a traffic jam situation, a darkness situation, or a situation related to other road users.

5. The computer implemented method of at least one of claims 3 or 4,
wherein the trigger is determined based on at least one of a camera, a rain sensor, vehicle to vehicle communication, a weather forecast, a clock, a light sensor, a navigation system, or an infrastructure to vehicle communication.

6. The computer implemented method of at least one of claims 1 to 5,
wherein the visualization comprises information of a navigation system.

7. The computer implemented method of at least one of claims 1 to 6, wherein the data comprises object information based on the radar responses.

8. The computer implemented method of at least one of claims 1 to 7,

   wherein the data comprises segmentation data based on the radar responses; and/ or wherein the data comprises classification data based on the radar responses.

9. The computer implemented method claim 8, further comprising the following step carried out by the computer hardware components: determining a height of an object based on the classification.

10. The computer implemented method of at least one of claims 1 to 9, wherein the visualization comprises a driver alert.

11. The computer implemented method of at least one of claims 1 to 10, wherein the visualization is displayed in an augmented reality display.

12. The computer implemented method of at least one of claims 1 to 11, wherein the visualization is determined based on combining the data with at other sensor data.

13. Computer system (600), the computer system (600) comprising a plurality of computer hardware components configured to carry out steps of the computer implemented method of at least one of claims 1 to 12.

14. Vehicle, comprising the computer system (600) of claim 13 and the at least one radar sensor (608).

15. Non-transitory computer readable medium comprising instructions for carrying out the computer implemented method of at least one of claims 1 to 12.

Fig. 1A

Fig. 1B

Fig. 1C

Fig. 2

<u>300</u>

Fig. 3

**400**

**402**

**404**

Confidence scaling alpha **412a**

**408**
Segmentation

Class decision **414**

Alpha mapping **416**

Color mapping **418**

Confidence scaling color **412b**

Height lookup **420**

PC / image rendering **422**

**406**
Display

Warning generation **424**

Box rendering **426**

**410**
Box output

Fig. 4

EP 4 382 952 A1

16

500

Determine data associated with radar responses captured by at least one radar sensor mounted on the vehicle — 502

Determine a visualization of the data — 504

Display the visualization to the occupant of the vehicle — 506

Fig. 5

<u>600</u>

Computer system

Processor /602

Memory /604

Non-transitory data storage /606

/610

Radar sensor /608

Fig. 6

# EP 4 382 952 A1

**EUROPEAN SEARCH REPORT**

Application Number

EP 22 21 2340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/155157 A1 (GODSEY SANDRA LYNN [US] ET AL) 27 May 2021 (2021-05-27) * paragraph [0020] – paragraph [0024]; figure 4 * * paragraph [0012] – paragraph [0014]; figures 1,2 * * paragraph [0017] * | 1-5,7,8, 10-15 | INV. G01S7/04 G01S7/41 G01S13/931 G01S13/86 |
| X | US 2020/189467 A1 (KONDO KATSUHIKO [JP] ET AL) 18 June 2020 (2020-06-18) | 1,2,6-8, 10-15 | |
| Y | * paragraph [0026] – paragraph [0054]; figures 1-6 * | 9 | |
| X | US 2010/253540 A1 (SEDER THOMAS A [US] ET AL) 7 October 2010 (2010-10-07) | 1-8, 11-15 | |
| Y | * paragraph [0182]; figures 33-34 * * paragraph [0158] – paragraph [0159] * * paragraph [0120]; figure 17 * | 9 | |
| Y | EP 3 644 090 A1 (MANDO CORP [KR]) 29 April 2020 (2020-04-29) * paragraph [0129] – paragraph [0131] * | 9 | |

TECHNICAL FIELDS SEARCHED (IPC)

G01S

The present search report has been drawn up for all claims

| Place of search | Date of completion of the search | Examiner |
|---|---|---|
| Munich | 3 May 2023 | Kaleve, Abraham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 22 21 2340

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| US 2021155157 | A1 | 27-05-2021 | NONE | | |
| US 2020189467 | A1 | 18-06-2020 | JP | 6686988 B2 | 22-04-2020 |
| | | | JP | 2019041334 A | 14-03-2019 |
| | | | US | 2020189467 A1 | 18-06-2020 |
| | | | WO | 2019044185 A1 | 07-03-2019 |
| US 2010253540 | A1 | 07-10-2010 | CN | 101915990 A | 15-12-2010 |
| | | | DE | 102010013532 A1 | 14-10-2010 |
| | | | US | 2010253540 A1 | 07-10-2010 |
| EP 3644090 | A1 | 29-04-2020 | CN | 111098853 A | 05-05-2020 |
| | | | EP | 3644090 A1 | 29-04-2020 |
| | | | KR | 20200047886 A | 08-05-2020 |
| | | | US | 10460182 B1 | 29-10-2019 |
| | | | US | 10579886 B1 | 03-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220026568 A1